(19) Europäisches Patentamt
European Patent Office
Office européen des brevets

(11) **EP 3 063 879 B1**

(12) **EUROPÄISCHE PATENTSCHRIFT**

(45) Veröffentlichungstag und Bekanntmachung des Hinweises auf die Patenterteilung:
**02.08.2017 Patentblatt 2017/31**

(51) Int Cl.:
***H04B 7/185*** *(2006.01)*

(21) Anmeldenummer: **14783788.4**

(22) Anmeldetag: **02.10.2014**

(86) Internationale Anmeldenummer:
**PCT/EP2014/071175**

(87) Internationale Veröffentlichungsnummer:
**WO 2015/062810 (07.05.2015 Gazette 2015/18)**

(54) **VERFAHREN ZUR IDENTIFIKATION VON STÖRSENDERN AUS EINER ANZAHL VON BEKANNTEN SATELLITENSENDERN.**

METHOD OF INDENTIFYING JAMMING TRANSMITTERS IN MIDST OF A NUMBER OF KNOWN SATELLITE TRANSMITTERS.

MÉTHODE D'IDENTIFICATION DE TRANSMETTEURS BROUILLEURS PARMI UN ENSEMBLE DE TRANSMETTEURS DE SATELLITE CONNUS.

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.10.2013 AT 507122013**

(43) Veröffentlichungstag der Anmeldung:
**07.09.2016 Patentblatt 2016/36**

(73) Patentinhaber: **Siemens Convergence Creators GmbH**
**1210 Wien (AT)**

(72) Erfinder: **NÖLLE, Michael**
**A-1100 Wien (AT)**

(74) Vertreter: **Maier, Daniel Oliver**
**Siemens AG**
**Postfach 22 16 34**
**80506 München (DE)**

(56) Entgegenhaltungen:
**WO-A1-94/09571 US-A- 4 653 053**

- **BISCHOF C H: "LAPACK: PORTABLE LINEARE ALGEBRA-SOFTWARE FUER SUPERCOMPUTER1)", INFORMATIONSTECHNIK IT, OLDENBOURG VERLAG. MUNCHEN, DE, Bd. 34, Nr. 1, 1. Februar 1992 (1992-02-01), Seiten 44-49, XP000290486, ISSN: 0179-9738**
- **ANGERSON E ET AL: "LAPACK: A portable linear algebra library for high-performance computers", PROCEEDINGS OF THE SUPERCOMPUTING CONFERENCE. NEW YORK, NOV. 12 - 16, 1990; [PROCEEDINGS OF THE SUPERCOMPUTING CONFERENCE], WASHINGTON, IEEE COMP. SOC. PRESS, US, Bd. CONF. 3, 12. November 1990 (1990-11-12), Seiten 2-11, XP010019922, DOI: 10.1109/SUPERC.1990.129995 ISBN: 978-0-8186-2056-0**

## Beschreibung

### Technisches Gebiet

Die Erfindung betrifft ein Verfahren zum Vergleich von Signalen sowie ein Verfahren zur Identifikation von Störsendern aus einer Anzahl von bekannten Satellitensendern. Die Erfindung benutzt für den Vergleich der Signale Verfahren im Kontext der Quanteninformationstheorie.

### Stand der Technik

Unter dem Begriff $V^\dagger$ einer Matrix wird im Zusammenhang mit dieser Anmeldung stets die adjungierte Matrix der Matrix $V$ verstanden, die sich als konjugiert komplexe Matrix der transponierten Matrix von $V$ ergibt.

Aus dem Stand der Technik sind unterschiedliche Verfahren bekannt, einzelne Signale miteinander zu vergleichen. Insbesondere können einzelne Signale mit unterschiedlichen Transformationen transformiert werden und die so ermittelten Transformationsresultate miteinander verglichen werden. Für bestimmte Arten von Signalen kann davon ausgegangen werden, dass sie jeweils aufeinanderfolgende Signalperiodenaufweisen, innerhalb derer das Signal ähnliche Signalformen aufweist, wobei jedoch durchaus auch Abweichungen zwischen den Signalformen bestehen können. Solche Signalperioden können von beliebiger Dauer sein. Diese Signale werden durch unterschiedliche Werte, etwa durch Abtastwerte dargestellt, die zu bestimmten Abtastzeitpunkten aufgenommen wurden.

Hintergrund der Erfindung ist es, bestimmte Charakteristika von im Wesentlichen periodischen Signalen wirksam zu erkennen und gegebenenfalls unterschiedlichen Signalsendeeinrichtungen zuzuweisen.

Ein bevorzugter Aspekt der Erfindung ist der steigende Bedarf für Satellitenkommunikationsverbindungen, der zu einer hohen Anzahl unterschiedlicher Satellitensignale geführt hat. Dies führt in weitere Folge dazu, dass Signalstörungen aufgrund schlechter Antenneninstallationen erfolgen. Weitere Gründe für mögliche Signalstörungen können in terroristischen oder politisch motivierten Störungen liegen, aber auch einfach darin begründet sein, dass von den Betreibern einer Station vergessen wurde, einen Sender abzuschalten. Für die Betreiber von Satelliten ist es daher erforderlich, Signalstörungen nicht bloß feststellen zu können, sondern auch deren Ursachen zu identifizieren und geographisch zu lokalisieren, um den Störsender rasch aufspüren zu können.

Siehe BISCHOF C H: "LAPACK: PORTABLE LINEARE ALGEBRA-SOFTWARE FÜR SUPERCOMPUTER1)", INFORMATIONSTECHNIK IT, OLDENBOURG VERLAG. MÜNCHEN, DE, Band. 34, Nummer. 1, 1. Februar 1992 (1992-02-01), Seiten 44-49, XP000290486,ISSN: 0179-9738.

### Darstellung der Erfindung

Die meisten aus dem Stand der Technik bekannten Verfahren haben jedoch einen wesentlichen Nachteil, nämlich dass es mit den momentan bekannten Verfahren notwendig ist, zumindest zwei Satelliten bei der Bestimmung des Störsenders zur Verfügung zu haben. Mit der vorliegenden Erfindung wird die Aufgabe gelöst, einzelne Störsender auf Grundlage eines einzigen von einem Satelliten aufgenommenen Signals zu identifizieren. Erfindungsgemäß ist daher ein Verfahren zur Vorbereitung eines Signals zur Identifikation von Störsendern aus einer Anzahl von bekannten Satellitensendern, wobei für jeden der vorhandenen Satellitensender jeweils durch, insbesondere äquidistante, Abtastung der jeweiligen Signalstärke jeweils ein Signal ermittelt wird und für dieses Signal jeweils eine Vergleichskenngröße für den Sender ermittelt wird, vorgeschlagen, bei dem

a) das Signal in eine Anzahl von aufeinander folgenden Signalperioden mit vorgegebener gleicher Länge unterteilt wird,

b) jeder der Abtastwerte mittels einer stetigen und monoton steigenden oder fallenden Normalisierungsfunktion auf einen normalisierten Abtastwert innerhalb eines vorgegebenen Normintervalls, insbesondere des Intervalls zwischen 0 und 1, abgebildet wird,

c) für jeden der normalisierten Abtastwerte jeweils ein Abtastvektor mit zwei Elementen erstellt wird, dessen erstes Element dem normalisierten Abtastwert entspricht und dessen zweites Element derart gewählt wird, dass eine auf den Abtastvektor angewandte Vektornorm den Wert 1 ergibt,

d) die Elemente der Abtastvektoren jeweils in eine Signalmatrix eingetragen werden, wobei jeweils aus derselben Signalperiode stammende Elemente jeweils in derselben Zeile der Signalmatrix eingetragen werden,

e) die ersten und zweiten Elemente von Abtastvektoren, die zu einem bestimmten Abtastzeitpunkt in Bezug auf den Beginn der jeweiligen Signalperiode ermittelten Abtastwert ermittelt wurden, jeweils in derselben Spalte der Signalmatrix angeordnet sind, wobei jeweils für das erste und zweite Element jeweils separate Spalten vorgesehen werden,

f) die Elemente der Signalmatrix derart normalisiert werden, dass die Anwendung einer vorgegebenen Vektornorm auf die Signalmatrix stets den Wert 1 ergibt, oder

g) eine Singulärwertzerlegung der Signalmatrix vorgenommen wird, wobei diese in die folgende Produktdarstellung zerlegt wird,

$$M = USV^{\dagger}$$

wobei $U$ und $V$ jeweils unitäre Matrizen sind, und

h) zur Vorbereitung des jeweiligen Signals für den Vergleich jeweils eine oder mehrere Zeilen der für das jeweilige Signal ermittelten unitären Matrix $V^{\dagger}$ als Vergleichskenngröße herangezogen und dem jeweiligen Signal zugeordnet wird oder werden

- wobei bei Feststellung eines Störsenders für das vom Störsender abgegebene Signal jeweils durch, insbesondere äquidistante, Abtastung der jeweiligen Signalstärke jeweils ein Störsignal ermittelt wird und für dieses Störsignal ebenfalls eine Vergleichskenngröße gemäß den Schritten a) bis h) ermittelt wird, wobei bei der Ermittlung der Vergleichskenngröße für das jeweilige Signal und der Vergleichskenngröße für das Störsignal dieselbe Vorgehensweise verwendet wird,
- wobei die Vergleichskenngröße für den Störsender mit jeder der Vergleichskenngrößen für die Sender, verglichen wird und jeweils ein Maßwert zur Verfügung gehalten wird, der angibt, wie groß die Übereinstimmung des Signals des Störsenders mit dem Signal des jeweiligen Satellitensenders ist.

Eine bevorzugte Anordnung der ersten und zweiten Elemente, die deren zeitliche Abfolge vorteilhaft wiedergibt, sieht vor, dass die ersten und zweiten Elemente von Abtastvektoren jeweils derart in Spalten der Signalmatrix geordnet werden, sodass erste Elemente, die von einem früheren Abtastzeitpunkt herrühren, jeweils in Spalten mit geringerem Spaltenindex eingeordnet werden als erste Elemente, die von einem späteren Abtastzeitpunkt herrühren **und** zweite Elemente, die von einem früheren Abtastzeitpunkt herrühren, jeweils in Spalten mit geringerem Spaltenindex eingeordnet werden als zweite Elemente, die von einem späteren Abtastzeitpunkt herrühren.

Ein bevorzugtes Verfahren zur Zuordnung von ersten und zweiten Elementen zum Spalten der Signalmatrix sieht vor, dass die ersten und zweiten Elemente von Abtastvektoren jeweils derart in Spalten der Signalmatrix geordnet werden, sodass bei einer Signalmatrix mit $n = 2l$ Spalten sämtliche ersten Elemente in die Spalten 1 bis $l$ und sämtliche zweiten Elemente in die Spalten $l$+1 bis $2l$ eingeordnet werden **oder** die zum selben $i$-ten Abtastzeitpunkt erstellten ersten und zweiten Elemente ($q_i$, $\bar{q}_i$) jeweils in den Spalten $2i$-1 und $2i$ eingeordnet werden, wobei $1 \leq i \leq l$.

Um vorteilhaft einzelne Abweichungen von der Periodenform feststellen zu können, kann vorgesehen sein, dass dem Signal jeweils eine Zeile oder mehrere Zeilen der unitären Matrix $V^{\dagger}$ als Vergleichskenngröße zugeordnet wird, wobei insbesondere die zweite Zeile der unitären Matrix $V^{\dagger}$ herangezogen wird.

Eine beispielhafte Abbildung der einzelnen Abtastwerte in erste und zweite Elemente sieht vor, dass für die Abbildung des jeweiligen Signals auf das Normintervall der Maximalwert und der Minimalwert der Abtastwerte des jeweiligen Signals ermittelt werden, wobei für den maximalen Abtastwert das erste Element auf einen maximalen Intervallwert, insbesondere den Wert 1, gesetzt wird und das zweite Element auf den Wert 0 gesetzt wird, und wobei für den minimalen Abtastwert das zweite Element auf einen maximalen Intervallwert, insbesondere den Wert 1, gesetzt wird und das erste Element auf den Wert 0 gesetzt wird.

Eine Normierung der einzelnen Elemente der Signalmatrix sieht vor, dass die gesamte Signalmatrix mit einem Gewichtungsfaktor w multipliziert wird, der dem Kehrwert der Wurzel von der Hälfte der Anzahl der Matrixelemente

$$w = \sqrt{\frac{2}{mn}}$$

entspricht, insbesondere, dass gewählt wird, wobei $m$ der Anzahl der Zeilen und $n$ der Anzahl der Spalten der Signalmatrix entspricht.

Um nicht zeitlich äquidistant abgetastete Signale vorteilhaft erfassen zu können, kann vorgesehen sein, dass vorab innerhalb der Signalperiode Abtastzeitpunkte und äquidistante Abtastintervalle vorgegeben werden, dass für das Signal eine Interpolationsfunktion ermittelt wird, die eine durch die Signalwerte und die Abtastzeitpunkte und Abtastintervalle vorgegebene Signalform aufweist und dass für die Vergleichskenngröße für das Signal auf Grundlage eines weiteren Signals ermittelt wird, das durch Abtastung der Interpolationsfunktion an den vorgegebenen Abtastzeitpunkten ermittelt wird.

Um einzelne Signale, die erfindungsgemäß auf einen Vergleich vorbereitet wurden, miteinander vergleichen zu können, kann vorgesehen sein, dass für jedes der beiden Signale jeweils, gemäß einem oder mehreren der Ansprüche 1 bis 7, eine Vergleichskenngröße ermittelt wird, und dass für den Vergleich der beiden Signale ein Abstandswert für die beiden Signale erstellt wird, indem ein Abstandsmaß auf die den jeweiligen Signalen zugeordneten Vergleichskenngrößen angewendet und der dadurch ermittelte Maßwert als Vergleichswert für die Übereinstimmung der Signale zur

$$D(\boldsymbol{v}_1, \boldsymbol{v}_2) = \sqrt{1 - \left| \boldsymbol{v}_1^\dagger \boldsymbol{v}_2 \right|^2},$$

Verfügung gehalten wird. wobei $v_1$ eine Spalte der dem ersten Signal $S_1$ zugeordneten Matrix $\boldsymbol{V}_1^*$ ist und wobei $\boldsymbol{v}_2$ eine Spalte der dem zweiten Signal $S_2$ zugeordneten Matrix $\boldsymbol{V}_2^*$ ist. Hierbei ist $(\boldsymbol{V}^*)_{ij} = (\boldsymbol{V}_{ij}^*)$.

Eine bevorzugte Ermittlung der ersten und zweiten Elemente aus den Messwerten kann erfolgen, indem das erste Element des Abtastvektors gemäß $q_i = \sqrt{p_i}$ ermittelt wird und das zweite Element insbesondere gemäß $\bar{q}_i = \sqrt{1 - p_i}$ ermittelt wird, oder indem das erste Element des Abtastvektors gemäß $q_j = e^{i\varphi_j}\sqrt{p_j}$ ermittelt wird und das zweite Element insbesondere gemäß $q_j = e^{i\chi_j}\sqrt{1 - p_j}$ ermittelt wird.

Die Erfindung löst diese Aufgabe bei einem Verfahren zur Identifikation von Störsendern aus einer bekannten Anzahl von Satellitensendern mit den kennzeichnenden Merkmalen des Patentanspruchs 1.

Insbesondere kann vorgesehen sein, dass als Dauer der Signalperioden jeweils ein Tag oder ein gleich langer Zeitabschnitt herangezogen wird.

Eine bevorzugte Identifikation des Störsenders sieht vor, dass ein Satellitensender als Störsender identifiziert wird, für den eine große Übereinstimmung indizierender Maßwert, insbesondere der die größte Übereinstimmung indizierende Maßwert, ermittelt worden ist.

Ein Programm zur Durchführung eines erfindungsgemäßen Verfahrens kann auf einem Datenträger abgespeichert sein.

**Ausführung der Erfindung**

Eine bevorzugte Ausführungsform der Erfindung wird im Folgenden anhand eines Ausführungsbeispiels näher dargestellt.

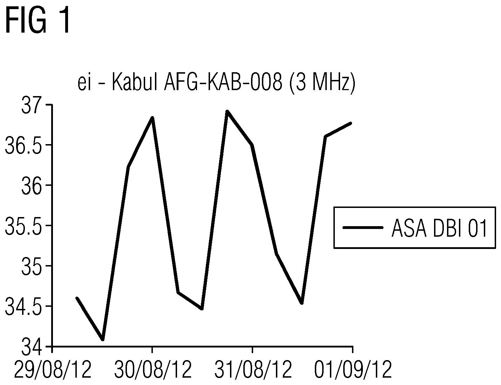

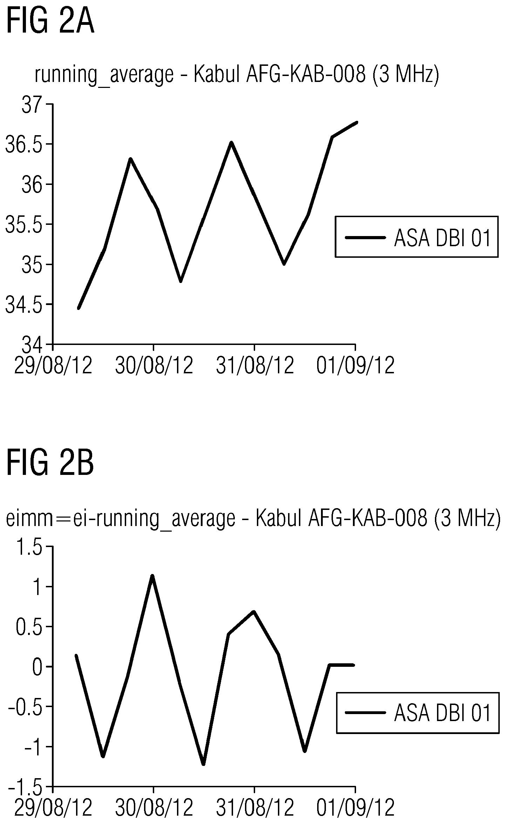

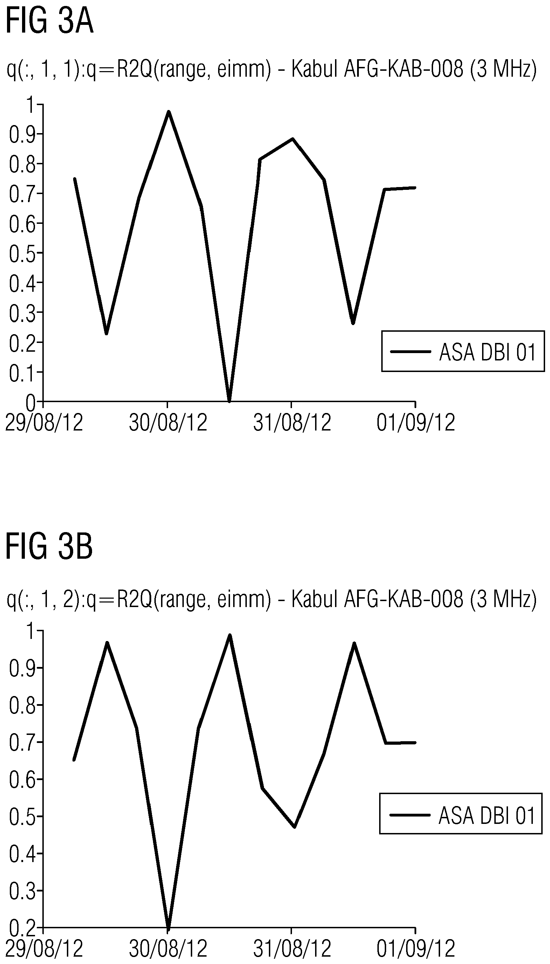

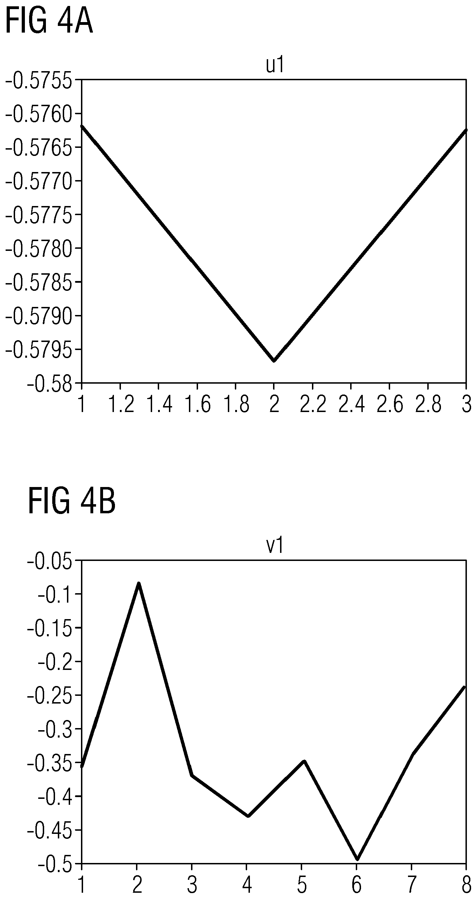

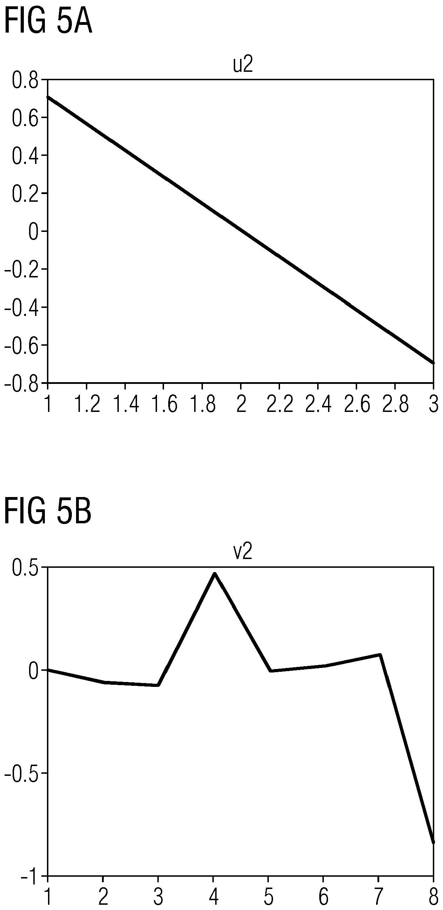

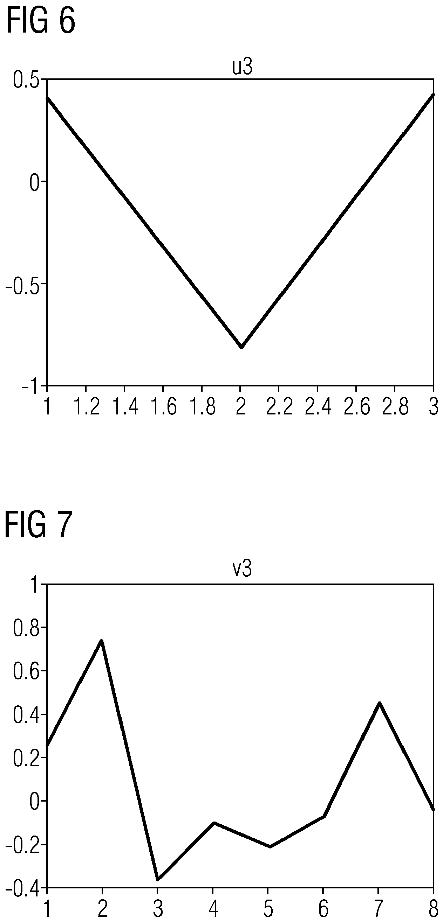

In **Fig. 1** ist ein Signal dargestellt, das aus einer Anzahl von Abtastwerten $E_i$ besteht, die über einen Zeitraum von drei Tagen mit vier Messungen pro Tag aufgenommen wurden. Um bestimmte Signalschwankungen besser sichtbar zu machen, ist in **Fig. 2a** ein laufend gebildeter Mittelwert des Signals dargestellt. **Fig. 2b** zeigt die Abweichung des aufgenommenen Signals vom laufend erstellten Mittelwert. **Fig. 3a und 3b** zeigen den zeitlichen Verlauf der Elemente des einen Abtastvektors. In den **Fig. 4a bis 6b** sind jeweils einzelne Signalkomponenten der Matrizen $\boldsymbol{U}$ und $\boldsymbol{V}$ graphisch dargestellt. **Fig. 4a** zeigt die erste Spalte der Matrix $\boldsymbol{U}$. **Fig. 4b** zeigt die erste Spalte der Matrix $\boldsymbol{V}$. **Fig. 5a** zeigt die zweite Spalte der Matrix $\boldsymbol{U}$ sowie die zweite Spalte der Matrix $\boldsymbol{V}$. **Fig. 6** zeigt die dritte Spalte der Matrix $\boldsymbol{U}$. **Fig. 7** zeigt die dritte Spalte der Matrix $\boldsymbol{V}$.

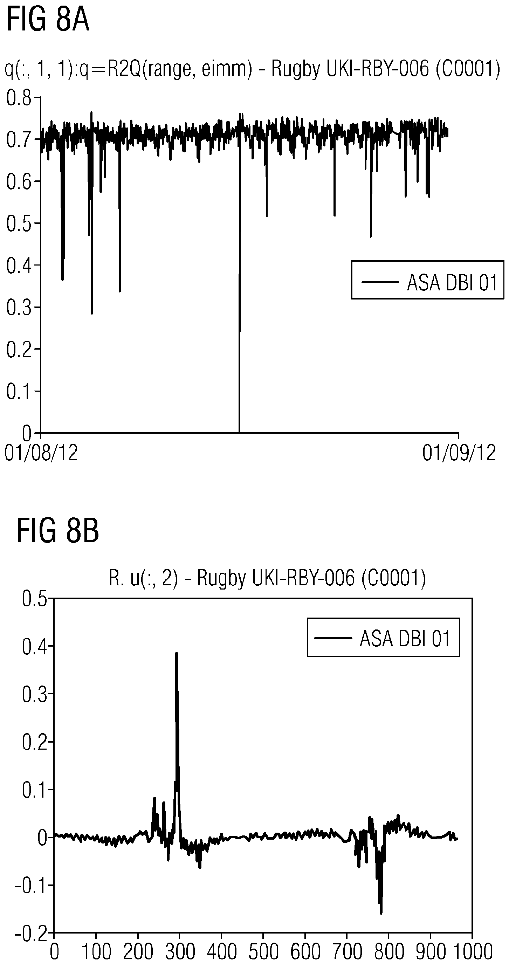

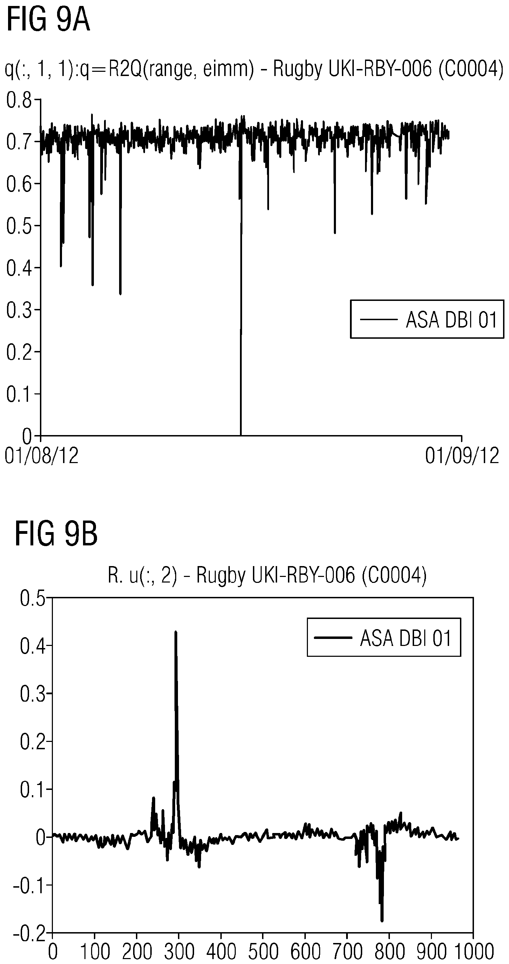

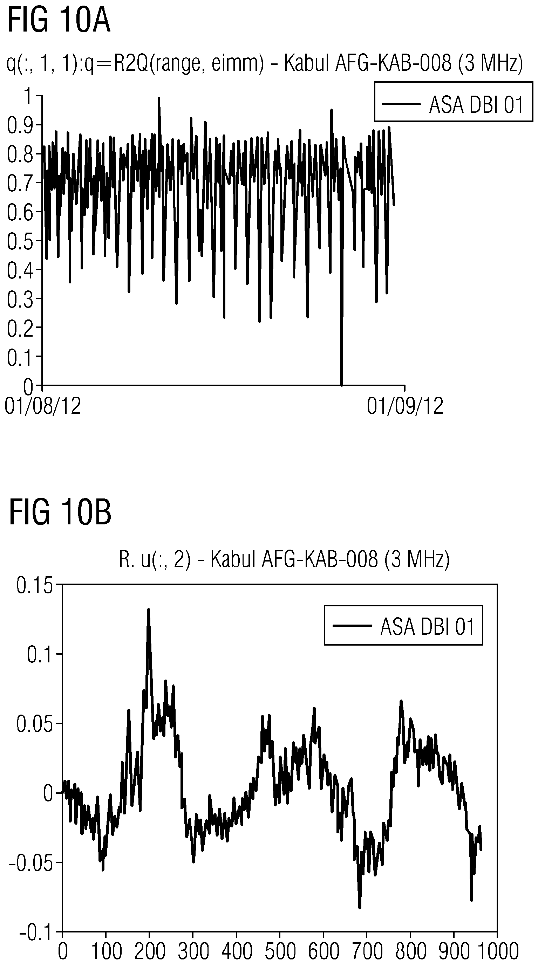

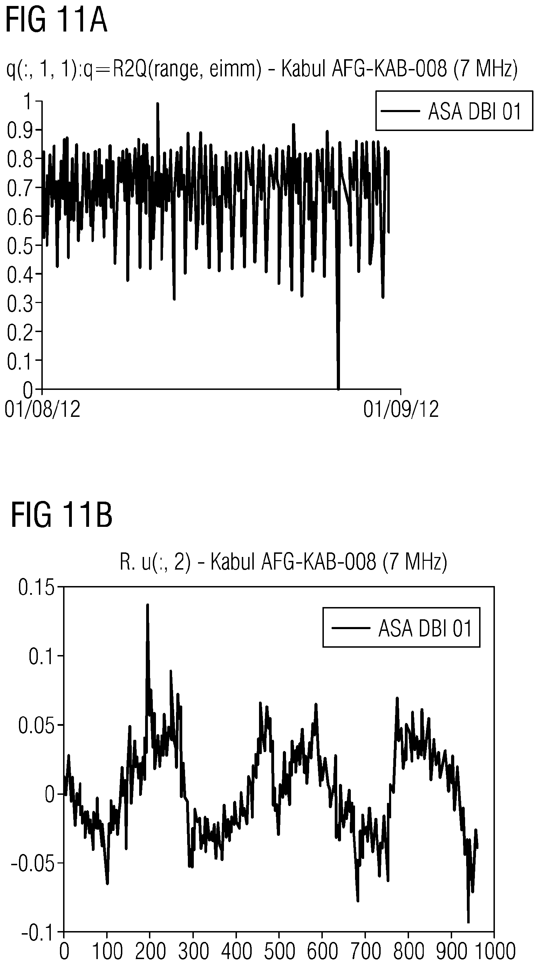

In **Fig. 8a** ist der Wert des ersten Elements des Abtastvektors über die Zeit dargestellt. Die Daten stammen von der Station Rugby in Großbritannien und zeigen den Verlauf des Signals über einen Monat. **In Fig. 8b** ist die zweite Spalte der Matrix $\boldsymbol{V}$ dargestellt, die charakteristisch für das Signal ist. **Fig. 9a** zeigt ein weiteres Beispiel für Signalwerte derselben Antenne mit einem unterschiedlichen Träger innerhalb einer Zeitspanne von einem Monat. Aus **Fig. 9b** kann ersehen werden, dass die so erstellten Zeitsignale sehr ähnlich den in **Fig. 8b** dargestellten Zeitsignalen sind. Die Auswahl des zweiten Vektors aus der Matrix $\boldsymbol{V}$ ist somit in hohem Maße charakteristisch für die jeweilige Sendestation. Zum Vergleich wird in den **Fig. 10a, 10b, 11a und 11b** jeweils zu **Fig. 8a und 8b** analoge Darstellungen für eine Station in Kabul, Afghanistan, dargestellt. Es kann einfach erkannt werden, dass die zweite Spalte der Matrix $\boldsymbol{V}$ in hohem Maße für die jeweilige Sendestation charakteristisch ist.

Im dargestellten bevorzugten Ausführungsbeispiel der Erfindung soll mittels einer Vielzahl von vorab bekannten Antennensignalen, die in einer Datenbank von historischen Daten abgespeichert ist und aus der die jeweiligen Signalstärken der bekannten Antenne bekannt sind, diejenige Antenne ausgewählt werden, die aufgrund einer Fehlbedienung als Störsender erkannt wurde. Dieses Verfahren beruht auf der Grundlage, dass die Signalstärke der Antenne über die Zeit aufgrund einer Vielzahl von Einflussfaktoren, insbesondere aufgrund der Bewegung des Satelliten, atmosphärischer Bedingungen oder Wetterbedingungen sowie Änderungen in der Signalverstärkung oder in der Antennenausrichtung an der Uplink-Station über die Zeit variiert. Es hat sich herausgestellt, dass hierbei bei den einzelnen Sendestationen bestimmte Variationsmuster der Signalstärke bestehen, die für eine bestimmte Antenne charakteristisch sind. Mit dem hier dargestellten bevorzugten Ausführungsbeispiel der Erfindung wird eine Signatur für die Variation der Signalstärke für jede Sendestation und für jeden Träger gefunden und eine Charakteristik der Uplink-Antenne ermittelt.

Ausgangspunkt des hier dargestellten Verfahrens sind Signale in Form von Signalstärken eines Trägers über einen bestimmten Zeitraum, wobei die Signalstärke zu äquidistanten Aufnahmezeitpunkten ermittelt und so erstellten Messwerte abgespeichert werden. Für den Fall, dass nicht äquidistante Aufnahmezeitpunkte zur Ermittlung der Signalstärke vorgegeben werden oder nur Messwerte zu nicht äquidistanten Aufnahmezeitpunkten zur Verfügung stehen, kann eine Interpolation vorgenommen werden, sodass Signale zur Verfügung stehen, die Abtastwerte der Signalstärke zu äquidistanten Aufnahmezeitpunkten enthalten.

Die Signale werden in einem weiteren Schritt zunächst normalisiert. Bei der im Folgenden beschriebenen Normalisierung wird zunächst vom jeweiligen Signal der gleitende Mittelwert berechnet. Dieser wird anschließend vom jeweiligen Signal abgezogen. **Fig. 1** zeigt den jeweiligen Rohdatensatz des Signals. Die Signalwerte des Signals beschreiben die Leistungsdichte des jeweiligen Signals in Form einer äquivalenten, isotropen Strahlungsleistung. **Fig. 2b** zeigt das Signal, das sich ergibt, wenn der gleitende Mittelwert vom jeweiligen Signal abgezogen wird.

Zur Normalisierung wird eine Normalisierungsfunktion herangezogen, die die einzelnen Abtastwerte $E_i$ in einen Wertebereich zwischen 0 und 1 abbildet. An Stelle der hier beschriebenen Normalisierung können auch unterschiedliche Arten der Normalisierung verwendet werden. So ist es zum Beispiel auch möglich, eine Schwellenwertfunktion auf die einzelnen Werte anzuwenden, mit der Werte, die größer als 1 oder kleiner als 0 sind, auf den jeweiligen minimalen oder maximalen Schwellenwert zu setzen.

Nach dieser Abbildung der Abtastwerte $E_i$ in das vorgegebene Normintervall stehen normalisierte Abtastwerte $p_i$ zur Verfügung. Im vorliegenden Ausführungsbeispiel wird das Signal S durch einen Vektor von Werten $\mathbf{E} = (E_1, E_2, \dots , E_N)$ vorgegeben. Die normalisierten Abtastwerte $\mathbf{p}_i$ werden gemäß der Vorschrift $\mathbf{p}_i = (E_i + E_{max}) / (2\,E_{max})$ ermittelt. $E_{max}$ stellt dabei der Maximalwert des Betrags der im Vektor $\mathbf{E}$ auftretenden Werte für das gesamte Signal dar, $E_i$ steht für jeden einzelnen der Elemente des Vektors $\mathbf{E}$. Es steht anschließend für jedes Element $E_i$ mit $1 \leq i \leq N$ ein normalisierter Abtastwert $\mathbf{p}_i$ zur Verfügung.

In einem nächsten Schritt wird für jeden normalisierten Abtastwert $\mathbf{p}_i$ jeweils ein Abtastvektor $\mathbf{q}_i$ mit zwei Elementen erstellt. Im vorliegenden Ausführungsbeispiel werden die einzelnen Abtastvektoren $\mathbf{q}_i$ gemäß

$$\mathbf{q}_i = \begin{pmatrix} q_i \\ \bar{q}_i \end{pmatrix} = \begin{pmatrix} \sqrt{p_i} \\ \sqrt{1 - p_i} \end{pmatrix}$$

Aufgrund dieser konkreten Vorgabe hat jeder der Abtastvektoren $\mathbf{q}_i$ eine Norm von 1, unabhängig davon, wie groß der jeweilige Abtastwert $E_i$ ist.

$$\|\mathbf{q}_i\| = \sqrt{\mathbf{q}_i^T \mathbf{q}_i} = 1$$

Aufgrund dieser speziellen Transformation stellt $\mathbf{q}_i$ einen bestimmten Zustand eines Zweizustandsquantensystems dar, das im Kontext der Quanteninformationstheorie als qubit oder "quantum bit" bekannt ist.

In **Fig. 1** ist ein Signal dargestellt, das aus einer Anzahl von Abtastwerten $E_i$ besteht, die über einen Zeitraum von drei Tagen mit vier Messungen pro Tag aufgenommen wurden. Um bestimmte Signalschwankungen besser sichtbar zu machen, ist in **Fig. 2a** ein laufend gebildeter Mittelwert des Signals dargestellt. **Fig. 2b** zeigt die Abweichung des aufgenommenen Signals vom laufend erstellten Mittelwert.

In einem weiteren Schritt wird eine Signalmatrix $\mathbf{M}$ aus den einzelnen normalisierten Abtastwerten $\mathbf{p}_i$ gebildet. Hierfür wird zunächst eine Signalperiodendauer vorgegeben, die im vorliegenden Ausführungsbeispiel 24 Stunden beträgt. Anstelle eines Tages können jedoch auch Vielfache oder Teiler eines Tages als Signalperiodendauer herangezogen werden. Die Verwendung einer Signalperiodendauer von 24 Stunden ist in Bezug auf die Periodizität von Satellitensignalen durchaus gerechtfertigt, da die Position von geostationären Satelliten im Wesentlichen im Tagesrhythmus schwankt, da diese einen Umlauf um die Erde innerhalb von 24 Stunden vollführen. Im vorliegenden Ausführungsbeispiel werden die einzelnen Abtastvektoren $\mathbf{q}_i$ herangezogen, die jeweils innerhalb desselben Tages, bezogen auf einen bestimmten Punkt der Erde, aufgenommen wurden. Jeder Abtastvektor $\mathbf{q}_i$ weist zwei Elemente $\mathbf{q}_i$, $\bar{\bar{\mathbf{q}}}_i$ auf, die jeweils aus derselben Signalperiode stammen. Diese Elemente $\mathbf{q}_i$, $\bar{\bar{\mathbf{q}}}_i$ werden in derselben Zeile der Zeilenmatrix $\mathbf{M}$ eingetragen. Die ersten und zweiten Elemente $\mathbf{q}_i$, $\bar{\bar{\mathbf{q}}}_i$ von Abtastvektoren $\mathbf{q}_i$, die zu einem bestimmten Abtastzeitpunkt in Bezug auf den Beginn der jeweiligen Signalperiode ermittelt wurden, werden jeweils in derselben Spalte der Signalmatrix $\mathbf{M}$ angeordnet, wobei jeweils für das erste und zweite Element $\mathbf{q}_i$, $\bar{\mathbf{q}}_i$ separate Spalten vorgesehen werden. Im vorliegenden Fall umfasst eine Zeile der Signalmatrix $\mathbf{M}$, bezeichnet mit $\mathbf{w}_j$ jeweils sämtliche Elemente eines Abtastvektors $\mathbf{q}_i$, die aufgrund von Abtastwerten aus demselben Tag ermittelt wurden. Der Index j, der in Bezug auf die Signalmatrix $\mathbf{M}$ den Zeilenindex darstellt, bezeichnet jeweils den Tag bzw. die Signalperiode, zu der der jeweilige Abtastvektor $\mathbf{q}_i$

ermittelt wurde, und $1 \leq j \leq m$. Im vorliegenden Ausführungsbeispiel werden die einzelnen Tage in chronologischer Reihenfolge in die Signalmatrix $M$ als Zeilenvektoren $w_j$ eingeordnet. Dies ist jedoch keinesfalls zwingend, sodass auch eine davon abweichende Einordnung der einzelnen Vektoren $w_j$ in die Signalmatrix $M$ möglich ist. Vor der Eintragung der einzelnen Elemente der Abtastvektoren $q_i$ bzw. der Vektoren $w_j$ in die Signalmatrix $M$, werden diese noch mit einem Gewichtswert normalisiert, sodass jeder der Zeilenvektoren $w_j$ jeweils der folgenden Bedingung genügt:

$$\|w_j\| = \sqrt{w_j{}^T w_j} = 1$$

In einer bevorzugten Ausführungsform der Erfindung ergibt sich damit der Zeilenvektor $w_j$ zu:

$$w_j = \frac{1}{\sqrt{l}}(q_{(j-1)l+1}, q_{(j-1)l+2}, \cdots, q_{jl}, \bar{q}_{(j-1)l+1}, \bar{q}_{(j-1)l*2}, \cdots, \bar{q}_{jl})$$

Die Zeilenvektoren haben jeweils doppelt so viele Einträge wie Abtastwerte $p_i$ pro Signalperiode zur Verfügung stehen. Stehen wie im vorliegenden Fall $l=4$ Messwerte für einen Tag zur Verfügung, so weist der Zeilenvektor $w_j$ eine Anzahl von $n=2l=8$ Einträgen auf. Im vorliegenden Ausführungsbeispiel werden Messwerte von 3 hintereinander liegenden Signalperioden, nämlich drei aufeinander folgenden Tagen verwendet, die einzelnen Zeilenvektoren $w_1$, $w_2$, $w_3$ der Signalmatrix S ergeben sich daher wie folgt:

$$w_1 = \frac{1}{\sqrt{4}}(q_1, q_2, q_3, q_4, \bar{q}_1, \bar{q}_2, \bar{q}_3, \bar{q}_4)$$

$$w_2 = \frac{1}{\sqrt{4}}(q_5, q_6, q_7, q_8, \bar{q}_5, \bar{q}_6, \bar{q}_7, \bar{q}_8)$$

$$w_3 = \frac{1}{\sqrt{4}}(q_9, q_{10}, q_{11}, q_{12}, \bar{q}_9, \bar{q}_{10}, \bar{q}_{11}, \bar{q}_{12})$$

Die einzelnen der Messwertmatrix $M$ zugeordneten Werte werden nochmals durch die Wurzel der zur Verfügung stehenden Zeilen $w_j$ dividiert. Hierdurch ergibt sich, dass ein sämtliche Elemente der Messwertmatrix $M$ enthaltender Messwertvektor $s$ der Form

$$s = \frac{1}{\sqrt{3}}(w_1 \oplus w_2 \oplus w_3)$$

$$s = \frac{1}{\sqrt{12}}(q_1, q_2, q_3, q_4, \bar{q}_1, \bar{q}_2, \bar{q}_3, \bar{q}_4, q_5, q_6, q_7, q_8, \bar{q}_5, \bar{q}_6, \bar{q}_7, \bar{q}_8, q_9, q_{10}, q_{11}, q_{12}, \bar{q}_9, \bar{q}_{10}, \bar{q}_{11})$$

die Norm 1 aufweist. Um eine aussagekräftige Vergleichskenngröße für die Charakteristik eines aufgenommenen Signals S ermitteln zu können, kann eine Schmidt-Zerlegung vorgenommen werden. Die 24-Stunden-Variation des Signals wird ermittelt, indem eine Schmidt-Zerlegung des Messwertvektors $s$, gemäß der nachstehenden Formel vorgenommen wird und als Ergebnis der Schmidt-Zerledung von $s$ die Werte $\alpha_i$ und die Vektoren $u_i$, $v_i$ ermittelt werden.

$$s = \sum_{i=1}^{k} \alpha_i u_i \otimes v_i$$

wobei die Vektoren $u_i$ orthonormale Vektoren der Größe $m$, und $v_i$ orthonormale Vektoren der Größe $n$ und die $\alpha_i$

Skalarwerte mit einem Wert größer als 0 und $k=\mathbf{min}\ \{m,n\}$ sind.

Es ist daher im Folgenden eine allgemeine Form dargestellt, bei der insgesamt Signale aus m Tagen zur Verfügung stehen, wobei für jeden Tag $\boldsymbol{n = 2l}$ Elemente von Abtastvektoren, das heißt $l$ Abtastwerte zur Verfügung stehen:

$$M = \begin{pmatrix} s_1 & s_2 & \cdots & s_n \\ s_{n+1} & s_{n+2} & \cdots & s_{2n} \\ s_{2n+1} & s_{2n+2} & \cdots & s_{3n} \\ \vdots & \vdots & \ddots & \vdots \\ s_{(m-1)n+1} & s_{(m-1)n+2} & \cdots & s_{mn} \end{pmatrix}$$

Die Messwertmatrix $M$ hat im vorliegenden Ausführungsbeispiel dann die folgende Gestalt:

$$M = \frac{1}{\sqrt{12}} \begin{pmatrix} q_1 & q_2 & q_3 & q_4 & \bar{q}_1 & \bar{q}_2 & \bar{q}_3 & \bar{q}_4 \\ q_5 & q_6 & q_7 & q_8 & \bar{q}_5 & \bar{q}_6 & \bar{q}_7 & \bar{q}_8 \\ q_9 & q_{10} & q_{11} & q_{12} & \bar{q}_9 & \bar{q}_{10} & \bar{q}_{11} & \bar{q}_{12} \end{pmatrix}$$

Dieses hier dargestellte Ausführungsbeispiel zeigt eine Messwertmatrix $M$ exemplarisch, bei der in drei Signalperioden jeweils vier Abtastwerte $p_i$ zur Verfügung stehen. Eine derartige Einschränkung ist jedoch keinesfalls notwendig. Durch die Singulärwertzerlegung kann die Matrix $M$ als Matrixprodukt von drei Matrizen dargestellt werden:

$$M = USV^{\dagger}$$

wobei $U$ und $V$ unitäre Matrizen sind. Die Spaltenvektoren der Matrix $U$ sind die Vektoren $u_i$ und die Zeilenvektoren der Matrix $V^{\dagger}$ sind die Vektoren $v_i$.

Jede Zeile der Matrix $M$ beschreibt einen 24-stündigen Verlauf des Signals, wobei durch die Schmidt-Dekomposition charakteristische Eigensignale für das jeweilige Signal ermittelt werden, die in den Vektoren $v_i$ enthalten sind.

Eine vorteilhafte numerische Implementierung ist in E. Anderson, Z. Bai, C. Bischof, S. Blackford, J. Demmel, J. Dongarra, J. Du Croz, A. Greenbaum, S. Hammarling, A. McKenney, and D. Sorensen LAPACK Users' Guide, Society for Industrial and Applied Mathematics, Phladelphia, PA, third edition, 1999, beschrieben.

In Bezug auf das vorliegende Ausführungsbeispiel ist die Matrix $U$ eine 3x3 Matrix, die Matrix $S$ eine 3x8 Matrix und die Matrix $V$ eine 8x8 Matrix. Die Matrix $U$ bzw. deren Spalten zeigt jeweils die Variation des auftretenden Signals über die einzelnen Signalperioden. Die Matrix $V^{\dagger}$ bzw. deren Zeilen zeigt unterschiedliche Komponenten und Variationen innerhalb einer Signalperiode. Da, wie eingangs erwähnt, tageszeitabhängige Schwankungen und Variationen für bestimmte Arten von Sendern charakteristisch sein können, sind die in der Matrix $V^{\dagger}$ enthaltenen, für den jeweiligen Sender charakteristischen, tageszeitabhängigen Schwankungen für die numerische Charakterisierung von Sendern besonders relevant, während die Änderungen über mehrere Tage hinweg eher von untergeordneter Bedeutung sind. Aus diesem Grund ist es vorteilhaft, die einzelnen Zeilenvektoren der Matrix $V^{\dagger}$ für die Charakterisierung des durch die Signalmatrix $M$ beschriebenen Signals S darzustellen.

In den **Fig. 4 bis 7** sind jeweils einzelne Signalkomponenten der Matrizen $U$ und $V^{\dagger}$ graphisch dargestellt. **Fig. 4a** zeigt die erste Spalte der Matrix $U$ und **Fig. 4b** zeigt die erste Zeile der Matrix $V^{\dagger}$. **Fig. 5a** zeigt die zweite Spalte der Matrix $U$ und **Fig. 5b** zeigt die zweite Zeile der Matrix $V^{\dagger}$. **Fig. 6** zeigt die dritte Spalte der Matrix $U$. **Fig. 7** zeigt die dritte Zeile der Matrix $V^{\dagger}$.

Es hat sich herausgestellt, dass der erste Zeilenvektor der Matrix $V^{\dagger}$ den dominanten Anteil der 24-Stunden-Variation des Signals enthält, die nicht besonders charakteristisch für die jeweilige Sendeeinheit oder Uplink-Antenne des Signals ist. Charakteristisch für diese ist insbesondere die zweite Zeilenvektor der Matrix $V^{\dagger}$ der Matrix $V^{\dagger}$, die im vorliegenden Ausführungsbeispiel als Signatur für weitere Signalvergleiche herangezogen wird.

Für die aus den Satellitendaten ermittelten Signale S wurde somit eine charakteristische Vergleichsgröße ermittelt, die insbesondere einen einfachen Vergleich zwischen diesen Signalen ermöglicht. Im vorliegenden Fall wird ein besonderes Ausführungsbeispiel eines solchen Vergleichs dargestellt, wobei davon ausgegangen wird, dass für die einzelnen Satellitensender bereits jeweils entsprechende charakteristische Vergleichskenngrößen zur Verfügung stehen. Sofern ein Störsignal auftritt, kann für dieses ebenfalls eine charakteristische Kenngröße nach derselben Vorschrift ermittelt werden. Im vorliegenden Fall werden diese beiden charakteristischen Vergleichskenngrößen mit $r$ und $s$ bezeichnet. Um ein Maß für die Unterschiedlichkeit zwischen diesen beiden Größen zu erhalten, kann beispielsweise die folgende Maßbestimmungsvorschrift herangezogen werden:

$$D(r, s) = \sqrt{1 - |\langle r, s \rangle|^2}$$

Durch die besondere Auswahl dieses Abstandsmaßes kann festgelegt werden, dass identische Vektoren jeweils einen Abstandswert von 0 liefern, während Vektoren, die zueinander orthogonal sind, jeweils maximalen Abstand von 1 zueinander aufweisen. Wenn die Signaturen bzw. charakteristischen Vergleichskenngrößen einen geringen Wert aufweisen, kann davon ausgegangen werden, dass die beiden erstellten charakteristischen Vergleichskenngrößen jeweils von derselben Antenne herrühren.

Steht eine Datenbank von bekannten Antennen zur Verfügung, so kann auch auf einfache Weise festgestellt werden, woher ein Störsignal stammt.

Für das vorliegende Ausführungsbeispiel, dessen Ergebnis in Tabelle dargestellt ist, wurden insgesamt Signale von elf verschiedenen Antennen aus sechs unterschiedlichen Städten herangezogen, wobei von einzelnen Stationen eventuell auch mehrere Signale ermittelt und herangezogen wurden. Wie aus der Tabelle deutlich zu erkennen, weisen die fett umrandeten Vergleichsergebnisse, bei denen jeweils Signale derselben Antenne miteinander verglichen wurden, jeweils sehr geringe Werte auf, während Vergleiche zwischen den charakteristischen Signalen unterschiedlicher Antennen einen sehr hohen Wert, insbesondere größer als 0,75 aufweisen. Auf diese Weise wird es einfach möglich, Signale unterschiedlicher Herkunft voneinander zu unterscheiden und auch Störsignale einfach einem bestimmten Sender zuzuordnen. Signale, die vom selben Sender herrühren, weisen dagegen in der vorliegenden Tabelle jeweils Werte auf, die deutlich unter diesen Werten liegen.

| C | Antenna Code | D(J1) | D(K1) | D(K3) | D(K4) | D(K5) | D(K7) | D(L1) | D(M1) | D(M3) | D(R1) | D(T1) |
|---|---|---|---|---|---|---|---|---|---|---|---|---|
| J1 | ISR-JER-006 | 0 | 0,932 | 0,995 | 1 | 1 | 0,997 | 1 | 0,983 | 0,99 | 0,999 | 0,992 |
| J2 | ISR-JER-006 | 0,062 | 0,93 | 0,995 | 1 | 1 | 0,998 | 1 | 0,984 | 0,991 | 0,999 | 0,991 |
| K1 | AFG-KAB-008 | 0,932 | 0 | 0,892 | 0,986 | 0,999 | 1 | 0,978 | 0,941 | 0,981 | 1 | 1 |
| K2 | AFG-KAB-008 | 0,911 | 0,425 | 0,908 | 0,982 | 0,993 | 1 | 0,979 | 0,95 | 0,977 | 0,999 | 1 |
| K3 | AFG-KAB-142 | 0,995 | 0,892 | 0 | 1 | 1 | 1 | 0,991 | 0,994 | 1 | 1 | 1 |
| K4 | AFG-KAB- 040 | 1 | 0,986 | 1 | 0 | 1 | 0,999 | 1 | 1 | 0,999 | 0,994 | 0,996 |
| K5 | AFG-KAB- 135 | 1 | 0,999 | 1 | 1 | 0 | 0,995 | 0,987 | 0,996 | 0,996 | 0,995 | 1 |
| K6 | AFG-KAB-135 | 0,996 | 0,999 | 0,999 | 1 | 0,643 | 0,983 | 0,983 | 0,994 | 0,996 | 0,998 | 1 |
| K7 | AFG-KAB-063 | 0,997 | 1 | 1 | 0,999 | 0,995 | 0 | 0,989 | 0,87 | 1 | 1 | 0,999 |
| L1 | POR-LIS-005 | 1 | 0,978 | 0,991 | 1 | 0,987 | 0,989 | 0 | 0,993 | 1 | 0,999 | 1 |
| M1 | POL-MMI-001 | 0,983 | 0,941 | 0,994 | 1 | 0,996 | 0,87 | 0,993 | 0 | 0,924 | 1 | 0,989 |
| M2 | POL-MMI-001 | 0,992 | 0,981 | 1 | 1 | 0,995 | 0,795 | 0,998 | 0,377 | 0,979 | 1 | 0,996 |
| M3 | POL-MMI-006 | 0,99 | 0,981 | 1 | 0,999 | 0,996 | 1 | 1 | 0,924 | 0 | 0,999 | 0,893 |
| R1 | UKI-RBY-006 | 0,999 | 1 | 1 | 0,994 | 0,995 | 1 | 0,999 | 1 | 0,999 | 0 | 0,995 |
| R2 | UKI-RBY-006 | 0,996 | 1 | 1 | 0,995 | 0,995 | 1 | 0,999 | 1 | 0,997 | 0,225 | 0,997 |
| R3 | UKI-RBY-006 | 0,998 | 0,999 | 1 | 0,995 | 0,994 | 1 | 1 | 1 | 0,996 | 0,227 | 0,996 |
| R4 | UKI-RBY-006 | 0,998 | 1 | 1 | 0,996 | 0,994 | 1 | 0,999 | 1 | 0,997 | 0,22 | 0,998 |
| R5 | UKI-RBY-006 | 0,997 | 1 | 1 | 0,996 | 0,994 | 1 | 0,999 | 1 | 0,997 | 0,206 | 0,994 |
| R6 | UKI-RBY-006 | 0,999 | 0,999 | 1 | 0,995 | 0,994 | 1 | 1 | 1 | 0,998 | 0,191 | 0,996 |
| T1 | ITA-TOR-022 | 0,992 | 1 | 1 | 0,996 | 1 | 0,999 | 1 | 0,989 | 0,893 | 0,995 | 0 |

Das im vorliegenden Ausführungsbeispiel verwendete Abstandsmaß sowie die Bildung der einzelnen Elemente der Abtastvektoren sind keinesfalls abschließend zu verstehen. Es ist selbstverständlich möglich, anstelle der verwen-

deten reellwertigen Abtastvektoren $q_i$ komplexwertige Abtastvektoren $q_i$ zu verwenden, und auf diese Weise zusätzliche Information über den Zustand der einzelnen Signale einzubringen. Es kann daher anstelle der bereits angegebenen Bildungsvorschrift des Abtastvektors $q$ ein alternativer Abtastvektor verwendet werden, der die folgende Gestalt aufweist:

$$q = \begin{pmatrix} e^{i\phi}\sqrt{p} \\ e^{i\chi}\sqrt{1-p} \end{pmatrix}$$

Um für komplexe Zahlen die Übereinstimmung zweier Vektoren ermitteln zu können, kann anstelle der für reelle Zahlen verwendeten Bildung des inneren Produkts eine alternative Rechenvorschrift angegeben werden.

$$\langle r, s \rangle = r^{\dagger} s$$

Mit dieser Art der Bildung eines inneren Produktes ist es auch möglich, einen Abstand gemäß der bekannten Formel

$$D(r, s) = \sqrt{1 - |\langle r, s \rangle|^2}$$

zu bilden. Es ergibt sich für diesen Fall für den Abtastvektor $q$

$$\|q\| = \sqrt{q^{\dagger} q} = 1$$

Vorstehend wurden die Ausdrücke Schmidt-Zerlegung und Singulärwertzerlegung verwendet. Diese beiden Verfahren unterscheiden sich lediglich hinsichtlich der Anordnung der Daten, wobei die Schmidt-Zerlegung auf Basis von Vektoren $s$ und die Singulärwertzerlegung auf Basis einer Matrix $M$ operiert. Die im Vektor $s$ und in der Matrix $M$ enthaltenen Werte sind - ebenso wie die als Ergebnis erhaltenen Vektoren $v_i$ bzw. Matrix $V$ - numerisch ident.

**Patentansprüche**

1. Verfahren zur Identifikation von Störsendern aus einer Anzahl von bekannten Satellitensendern, wobei für jeden der vorhandenen Satellitensender jeweils durch, insbesondere äquidistante, Abtastung der jeweiligen Signalstärke jeweils ein Signal (S) ermittelt wird und für dieses Signal (S) jeweils eine Vergleichskenngröße für den Sender ermittelt wird, indem

   a) das Signal (S) in eine Anzahl von aufeinander folgenden Signalperioden mit vorgegebener gleicher Länge unterteilt wird,
   b) jeder der Abtastwerte ($E_i$) mittels einer stetigen und monoton steigenden oder fallenden Normalisierungsfunktion auf einen normalisierten Abtastwert ($p_i$) innerhalb eines vorgegebenen Normintervalls, insbesondere des Intervalls zwischen 0 und 1, abgebildet wird,
   c) für jeden der normalisierten Abtastwerte ($p_i$) jeweils ein Abtastvektor ($q_i$) mit zwei Elementen erstellt wird, dessen erstes Element ($q_i$) dem normalisierten Abtastwert ($p_i$) entspricht und dessen zweites Element ($\overline{\overline{q_i}}$) derart gewählt wird, dass eine auf den Abtastvektor ($q_i$) angewandte Vektornorm den Wert 1 ergibt,
   d) die Elemente ($q_i$, $\overline{\overline{q_i}}$) der Abtastvektoren ($q_i$) jeweils in eine Signalmatrix ($M$) eingetragen werden, wobei jeweils aus derselben Signalperiode stammende Elemente jeweils in derselben Zeile der Signalmatrix ($M$) eingetragen werden,
   e) die ersten und zweiten Elemente ($q_i$, $\overline{\overline{q_i}}$) von Abtastvektoren ($q_i$), die zu einem bestimmten Abtastzeitpunkt in Bezug auf den Beginn der jeweiligen Signalperiode ermittelten Abtastwert ($E_i$, $p_i$) ermittelt wurden, jeweils in derselben Spalte der Signalmatrix ($M$) angeordnet sind, wobei jeweils für das erste und zweite Element ($q_i$, $\overline{\overline{q_i}}$) jeweils separate Spalten vorgesehen werden,
   f) die Elemente der Signalmatrix ($M$) derart normalisiert werden, dass die Anwendung einer vorgegebenen Vektornorm auf die Signalmatrix ($M$) stets den Wert 1 ergibt,

g) eine Singulärwertzerlegung der Signalmatrix (**M**) vorgenommen wird, wobei diese in die folgende Produktdarstellung zerlegt wird,

$$M = USV^{\dagger}$$

wobei **U** und **V** jeweils unitäre Matrizen sind, und

h) zur Vorbereitung des jeweiligen Signals (S) für den Vergleich jeweils eine oder mehrere Zeilen der für das jeweilige Signal (S) ermittelten unitären Matrix **V**$^{\dagger}$ als Vergleichskenngröße herangezogen und dem jeweiligen Signal (S) zugeordnet wird oder werden

- wobei bei Feststellung eines Störsenders für das vom Störsender abgegebene Signal jeweils durch, insbesondere äquidistante, Abtastung der jeweiligen Signalstärke jeweils ein Störsignal ermittelt wird und für dieses Störsignal ebenfalls eine Vergleichskenngröße gemäß den Schritten a) bis h) ermittelt wird, wobei bei der Ermittlung der Vergleichskenngröße für das jeweilige Signal und der Vergleichskenngröße für das Störsignal dieselbe Vorgehensweise verwendet wird,
- wobei die Vergleichskenngröße für den Störsender mit jeder der Vergleichskenngrößen für die Sender, verglichen wird und jeweils ein Maßwert zur Verfügung gehalten wird, der angibt, wie groß die Übereinstimmung des Signals des Störsenders mit dem Signal des jeweiligen Satellitensenders ist.

2. Verfahren nach Anspruch 1, **dadurch gekennzeichnet, dass** die ersten und zweiten Elemente ($q_i$, $\overline{\overline{q}}_i$) von Abtastvektoren ($q_i$) jeweils derart in Spalten der Signalmatrix (**M**) geordnet werden, sodass

- erste Elemente ($q_i$), die von einem früheren Abtastzeitpunkt herrühren, jeweils in Spalten mit geringerem Spaltenindex eingeordnet werden als erste Elemente ($q_j$), die von einem späteren Abtastzeitpunkt herrühren **und**
- zweite Elemente ($\overline{\overline{q}}_i$), die von einem früheren Abtastzeitpunkt herrühren, jeweils in Spalten mit geringerem Spaltenindex eingeordnet werden als zweite Elemente ($\overline{\overline{q}}_j$), die von einem späteren Abtastzeitpunkt herrühren.

3. Verfahren nach einem der vorangehenden Ansprüche, **dadurch gekennzeichnet, dass** die ersten und zweiten Elemente ($q_i$, $\overline{\overline{q}}_i$) von Abtastvektoren ($q_i$) jeweils derart in Spalten der Signalmatrix (**M**) geordnet werden, sodass bei einer Signalmatrix mit **n = 2l** Spalten

- sämtliche ersten Elemente ($q_i$) in die Spalten 1 bis **l** und sämtliche zweiten Elemente in die Spalten **l+1** bis **2l** eingeordnet werden **oder**
- die zum selben *i*-ten Abtastzeitpunkt erstellten ersten und zweiten Elemente ($q_i$, $\overline{\overline{q}}_i$) jeweils in den Spalten **2i**
- **1** und **2i** eingeordnet werden, wo 1≤*i*≤*l*.

4. Verfahren nach einem der vorangehenden Ansprüche, **dadurch gekennzeichnet, dass** dem Signal (S) jeweils eine Zeile oder mehrere Zeilen der unitären Matrix **V**$^{\dagger}$ als Vergleichskenngröße zugeordnet wird, wobei insbesondere die zweite Zeile der unitären Matrix **V**$^{\dagger}$ herangezogen wird.

5. Verfahren nach einem der vorangehenden Ansprüche, **dadurch gekennzeichnet, dass** für die Abbildung des jeweiligen Signals (S) auf das Normintervall der Maximalwert und der Minimalwert der Abtastwerte ($E_i$) des jeweiligen Signals (S) ermittelt werden,

- wobei für den maximalen Abtastwert ($E_i$) das erste Element ($q_i$) auf einen maximalen Intervallwert, insbesondere den Wert 1, gesetzt wird und das zweite Element ($\overline{\overline{q}}_i$) auf den Wert 0 gesetzt wird, und
- wobei für den minimalen Abtastwert ($E_i$) das zweite Element ($\overline{\overline{q}}_i$) auf einen maximalen Intervallwert, insbesondere den Wert 1, gesetzt wird und das erste Element ($q_i$) auf den Wert 0 gesetzt wird.

6. Verfahren nach einem der vorangehenden Ansprüche, **dadurch gekennzeichnet, dass** die gesamte Signalmatrix (**M**) mit einem Gewichtungsfaktor **w** multipliziert wird, der dem Kehrwert der Wurzel von der Hälfte der Anzahl der Matrixelemente entspricht, insbesondere, dass $w = \sqrt{\dfrac{2}{mn}}$ gewählt wird, wobei *m* der Anzahl der Zeilen und **n** der Anzahl der Spalten der Signalmatrix (**M**) entspricht.

**7.** Verfahren nach einem der vorangehenden Ansprüche, **dadurch gekennzeichnet,**

- **dass** vorab innerhalb der Signalperiode Abtastzeitpunkte und äquidistante Abtastintervalle vorgegeben werden,
- **dass** für das Signal eine Interpolationsfunktion ermittelt wird, die eine durch die Signalwerte und die Abtastzeitpunkte und Abtastintervalle vorgegebene Signalform aufweist und
- **dass** für die Vergleichskenngröße für das Signal auf Grundlage eines weiteren Signals ermittelt wird, das durch Abtastung der Interpolationsfunktion an den vorgegebenen Abtastzeitpunkten ermittelt wird.

**8.** Verfahren zum Vergleich von zwei Signalen (S$_1$, S$_2$) mit einer vorab vorgegebenen Dauer der Signalperioden, **dadurch gekennzeichnet, dass**

a) für jedes der beiden Signale (S$_1$, S$_2$) jeweils, gemäß einem oder mehreren der Ansprüche 1 bis 7, eine Vergleichskenngröße ermittelt wird, und
b) dass für den Vergleich der beiden Signale (S$_1$, S$_2$) ein Abstandswert D(S$_1$, S$_2$) für die beiden Signale (S$_1$, S$_2$) erstellt wird, indem ein Abstandsmaß auf die den jeweiligen Signalen (S$_1$, S$_2$) zugeordneten Vergleichskenngrößen angewendet und der dadurch ermittelte Maßwert als Vergleichswert für die Übereinstimmung der

Signale (S$_1$, S$_2$) zur Verfügung gehalten wird. $D(\boldsymbol{v}_1, \boldsymbol{v}_2) = \sqrt{1 - \left|\boldsymbol{v}_1^\dagger \boldsymbol{v}_2\right|^2}$, wobei $v_1$ eine Spalte der dem

ersten Signal S$_1$ zugeordneten Matrix $\boldsymbol{V}_1^*$ ist und wobei $\boldsymbol{v}_2$ eine Spalte der dem ersten Signal S$_2$ zugeordneten

Matrix $\boldsymbol{V}_2^*$ ist. Hierbei ist $(\boldsymbol{V}^*)_{ij} = (\boldsymbol{V}^*_{ij})$.

**9.** Verfahren nach einem der vorangehenden Ansprüche, **dadurch gekennzeichnet,**

a) **dass** das erste Element ($\boldsymbol{q}_i$) des Abtastvektors gemäß $q_i = \sqrt{p_i}$ ermittelt wird und das zweite Element

($\overline{\boldsymbol{q}_i}$) insbesondere gemäß $\overline{q}_i = \sqrt{1 - p_i}$ ermittelt wird, oder

b) **dass** das erste Element ($q_i$) des Abtastvektors gemäß $q_j = e^{i\varphi_j}\sqrt{p_j}$ ermittelt wird und das zweite Element

($\overline{\boldsymbol{q}_i}$) insbesondere gemäß $q_j = e^{i\chi_j}\sqrt{1 - p_j}$ ermittelt wird.

**10.** Verfahren nach einem der vorangehenden Ansprüche, **dadurch gekennzeichnet, dass** als Dauer der Signalperioden jeweils ein Tag oder ein gleich langer Zeitabschnitt herangezogen wird.

**11.** Verfahren nach einem der vorangehenden Ansprüche, **dadurch gekennzeichnet, dass** ein Satellitensender als Störsender identifiziert wird, für den eine große Übereinstimmung indizierender Maßwert, insbesondere der die größte Übereinstimmung indizierende Maßwert, ermittelt worden ist.

**12.** Datenträger, auf dem ein Programm zur Durchführung eines Verfahrens nach einem der vorangehenden Ansprüche abgespeichert ist.

**Claims**

**1.** Method for identifying interfering transmitters from among a plurality of known satellite transmitters, wherein, for each of the satellite transmitters present, a signal (S) is determined in each case by, in particular equidistant, sampling of the respective signal strength in each case and a comparison parameter for the transmitter is determined in each case for said signal (S), in which method

a) the signal (S) is subdivided into a number of succeeding signal periods of predefined equal length,
b) each of the sample values (E$_i$) is mapped by means of a constant and monotonically increasing or decreasing normalisation function to a normalised sample value ($p_i$) within a predefined normal interval, in particular the interval between 0 and 1,

c) a sampling vector ($q_i$) having two elements is produced in each case for each of the normalised sample values ($p_i$), the first element ($q_i$) of said sampling vector ($q_i$) corresponding to the normalised sample value ($p_i$) and the second element ($\overline{q_i}$) thereof being chosen in such a way that a vector norm applied to the sampling vector ($q_i$) yields the value 1,

d) the elements ($q_i$, $\overline{q_i}$) of the sampling vectors ($q_i$) are in each case entered into a signal matrix ($M$), wherein elements originating from the same signal period in each case are entered in each case in the same row of the signal matrix ($M$),

e) the first and second elements ($q_i$, $\overline{q_i}$) of sampling vectors ($q_i$) that were determined at a specific sampling time instant in relation to sample values ($E_i$, $p_i$) determined at the start of the respective signal period are in each case arranged in the same column of the signal matrix ($M$), separate columns in each case being provided for the first and second element ($q_i$, $\overline{q_i}$) in each case,

f) the elements of the signal matrix ($M$) are normalised in such a way that the application of a predefined vector norm to the signal matrix ($M$) always yields the value 1, or

g) a singular value decomposition of the signal matrix ($M$) is carried out, this being decomposed into the following product representation,

$$M = USV^{\dagger},$$

where $U$ and $V$ are in each case unitary matrices, and

h) in order to prepare the respective signal (S) for the comparison, one or more rows of the unitary matrix $V^{\dagger}$ determined for the respective signal (S) are in each case drawn upon as a comparison parameter and assigned to the respective signal (S),

- wherein upon detection of an interfering transmitter for the signal emitted by the interfering transmitter, an interference signal is determined in each case by, in particular equidistant, sampling in each case of the respective signal strength and a comparison parameter is likewise determined for said interference signal in accordance with steps a) to h), the same approach being used for the determination of the comparison parameter for the respective signal and the comparison parameter for the interference signal,

- wherein the comparison parameter for the interfering transmitter is compared with each of the comparison parameters for the transmitters, and in each case a dimension value is held available which indicates how great the agreement of the signal of the interfering transmitter is with the signal of the respective satellite transmitter.

2. Method according to claim 1, **characterised in that** the first and second elements ($q_i$, $\overline{q_i}$) of sampling vectors ($q_i$) are in each case ordered into columns of the signal matrix ($M$) in such a way that

- first elements ($q_i$) originating from an earlier sampling time instant are in each case arranged into columns having a smaller column index than first elements ($q_j$) originating from a later sampling time instant, **and**
- second elements ($\overline{q_i}$) originating from an earlier sampling time instant are in each case arranged into columns having a smaller column index than second elements ($\overline{q_j}$) originating from a later sampling time instant.

3. Method according to one of the preceding claims, **characterised in that** the first and second elements ($q_i$, $\overline{q_1}$) of sampling vectors ($q_i$) are in each case ordered into columns of the signal matrix ($M$) in such a way that, in a signal matrix having $n = 2l$ columns,

- all of the first elements ($q_i$) are arranged into the columns 1 to $l$ and all of the second elements into the columns $1 + 1$ to $2l$ **or**
- the first and second elements ($q_i$, $\overline{q_i}$) created at the same $i$-th sampling time instant are in each case arranged in the columns $2i - 1$ and $2i$, where $1 \le i \le 1$.

4. Method according to one of the preceding claims, **characterised in that** the signal (S) is in each case assigned one row or multiple rows of the unitary matrix $V^{\dagger}$ as a comparison parameter, wherein in particular the second row of the unitary matrix $V^{\dagger}$ is used.

5. Method according to one of the preceding claims, **characterised in that** for the mapping of the respective signal (S) to the normal interval, the maximum value and the minimum value of the sample values ($E_i$) of the respective signal (S) are determined,

    - wherein, for the maximum sample value ($E_i$), the first element ($q_i$) is set to a maximum interval value, in particular the value 1, and the second element ($\overline{q}_i$) is set to the value 0, and
    - wherein, for the minimum sample value ($E_i$), the second element ($\overline{q}_i$) is set to a maximum interval value, in particular the value 1, and the first element ($q_i$) is set to the value 0.

6. Method according to one of the preceding claims, **characterised in that** the entire signal matrix (**M**) is multiplied by a weighting factor **w** which corresponds to the reciprocal of the root of half of the number of matrix elements, in particular that $$\mathbf{w} = \sqrt{\frac{2}{mn}}$$ is chosen, where **m** corresponds to the number of rows and **n** to the number of columns of the signal matrix (**M**).

7. Method according to one of the preceding claims, **characterised in that**

    - sampling time instants and equidistant sampling intervals are predefined in advance within the signal period,
    - an interpolation function which has a signal shape predefined by the signal values and the sampling time instants and sampling intervals is determined for the signal, and
    - the comparison parameter for the signal is determined on the basis of a further signal which is determined by sampling of the interpolation function at the predefined sampling time instants.

8. Method for comparing two signals ($S_1$, $S_2$) having a duration of the signal periods predefined in advance, **characterised in that**

    a) a comparison parameter is determined in each case for each of the two signals ($S_1$, $S_2$), according to one or more of claims 1 to 7, and
    b) for the comparison of the two signals ($S_1$, $S_2$), a distance value D ($S_1$, $S_2$) is produced for the two signals ($S_1$, $S_2$) by applying a distance dimension to the comparison parameters assigned to the respective signals ($S_1$, $S_2$) and holding the thus determined dimension value available as a comparison value for the agreement of the signals ($S_1$, $S_2$).

$$D(\mathbf{v_1}, \mathbf{v_2}) = \sqrt{1 - |v_1^\dagger v_2|^2},$$

where $v_1$ is a column of the matrix $V_1^*$ assigned to the first signal $S_1$ and where $v_2$ is a column of the matrix $V_2^*$ assigned to the second signal $S_2$. It holds here that $(\mathbf{V^\star})_{ij} = (V_{ij}^*)$.

9. Method according to one of the preceding claims, **characterised in that**

    a) the first element ($q_i$) of the sampling vector is determined according to $\mathbf{q_i} = \sqrt{p_i}$ and the second element ($\overline{q}_i$) is determined in particular according to $\sqrt{1 - p_i}$, or

    b) the first element ($q_i$) of the sampling vector is determined according to $\mathbf{q_j} = e^{i\varphi j}\sqrt{p_j}$ and the second element ($\overline{q}_i$) is determined in particular according to $\mathbf{q_j} = e^{i\chi j}\sqrt{1 - p_j}$.

10. Method according to one of the preceding claims, **characterised in that** one day or an equally long time period is used in each case as the duration of the signal periods.

11. Method according to one of the preceding claims, **characterised in that** a satellite transmitter for which a dimension value has been determined indicating a great degree of agreement, in particular the dimension value indicating the greatest degree of agreement, is identified as the interfering transmitter.

**12.** Data medium on which a program for performing a method according to one of the preceding claims is stored.

**Revendications**

**1.** Procédé d'identification d'émetteurs brouilleurs parmi un ensemble d'émetteurs satellites connus, pour chacun des émetteurs satellites présents étant déterminé respectivement un signal (S) respectivement par échantillonnage, en particulier équidistant, de l'intensité de signal respective, et pour ce signal (S) étant déterminé respectivement un paramètre de comparaison pour l'émetteur par

a) subdivision du signal (S) en un nombre de périodes de signaux successives de longueur identique donnée ;
b) application de chacune des valeurs d'échantillonnage ($E_i$), au moyen d'une fonction de normalisation constante et ascendante ou descendante monotone sur une valeur d'échantillonnage normalisée ($p_i$) dans un intervalle normalisé donné, en particulier l'intervalle compris entre 0 et 1 ;
c) création, pour chacune des valeurs d'échantillonnage normalisées ($p_i$), de respectivement un vecteur d'échantillonnage ($q_i$) avec deux éléments, dont le premier ($q_i$) correspond à la valeur d'échantillonnage normalisée ($p_i$) et le deuxième ($\overline{q_i}$) est choisi de telle sorte qu'une norme vectorielle appliquée au vecteur d'échantillonnage ($q_i$) donne la valeur 1 ;
d) les éléments ($q_i$, $\overline{q_i}$) des vecteurs d'échantillonnage ($q_i$) sont respectivement introduits dans une matrice de signaux (M), des éléments respectivement issus de la même période de signal étant respectivement introduits dans la même ligne de la matrice de signaux (M) ;
e) agencement, respectivement dans la même colonne de la matrice de signaux (M), des premiers et deuxièmes éléments ($q_i$, $\overline{q_i}$ de vecteurs d'échantillonnage ($q_i$) qui ont été déterminés à un instant d'échantillonnage déterminé en référence à la valeur d'échantillonnage ($E_i$, $p_i$) déterminée au début de la période de signal respective, des colonnes séparées étant respectivement prévues pour les premier et deuxième éléments ($q_i$, $\overline{q_i}$) ;
f) normalisation des éléments de la matrice de signaux (M) de telle sorte que l'application d'une norme vectorielle donnée à la matrice de signaux (M) donne toujours la valeur 1 ;
g) décomposition de la valeur singulière de la matrice de signaux (M), celle-ci étant décomposée pour obtenir le produit suivant :

$$M = USV^\dagger$$

U et V étant respectivement des matrices unitaires, et
h) recours, respectivement, à une ou plusieurs lignes de la matrice unitaire $V^\dagger$ déterminée pour le signal respectif (S) en tant que paramètre de comparaison pour préparer le signal respectif (S) pour la comparaison, et affectation au signal respectif (S),

- un signal brouilleur étant respectivement déterminé, à la constatation d'un émetteur brouilleur pour le signal émis par l'émetteur brouilleur, respectivement par échantillonnage, en particulier équidistant, de l'intensité de signal respective, et un paramètre de comparaison étant également déterminé pour ce signal brouilleur conformément aux étapes a) à h), la même approche étant utilisée lors de la détermination du paramètre de comparaison pour le signal respectif et du paramètre de comparaison pour le signal brouilleur ;
- le paramètre de comparaison pour l'émetteur brouilleur étant comparé avec chacun des paramètres de comparaison pour l'émetteur et respectivement une valeur de mesure étant tenue à disposition, laquelle indique la mesure de la coïncidence entre le signal de l'émetteur brouilleur et le signal de l'émetteur satellite respectif.

**2.** Procédé selon la revendication 1, **caractérisé en ce que** les premiers et deuxièmes éléments ($q_i$, $\overline{q_i}$) de vecteurs d'échantillonnage ($q_i$) sont respectivement repris de manière telle dans des colonnes de la matrice de signaux (M) que

- des premiers éléments ($q_i$) résultant d'un instant d'échantillonnage antérieur sont respectivement repris dans des colonnes avec un indice de colonne inférieur à celui pour des premiers éléments (q$_j$) résultant d'un instant d'échantillonnage ultérieur et

- des deuxièmes éléments ($\overline{q}_i$) résultant d'un instant d'échantillonnage antérieur sont respectivement repris dans des colonnes avec un indice de colonne inférieur à celui pour des deuxièmes éléments ($\overline{q}_j$) résultant d'un instant d'échantillonnage ultérieur.

3. Procédé selon l'une des revendications précédentes, **caractérisé en ce que** les premiers et deuxièmes éléments (qi, $\overline{q}_i$) de vecteur d'échantillonnage (q$_i$) sont respectivement repris dans des colonnes de la matrice de signaux (M) de telle sorte que, pour une matrice de signaux comportant n = 2l colonnes,

- l'ensemble des premiers éléments (q$_i$) sont repris dans les colonnes 1 à *l* et l'ensemble des deuxièmes éléments, dans les colonnes *l*+1 à 2*l* ou
- les premiers et deuxièmes éléments (qi, $\overline{\overline{q}}_i$) créés au même i$^{ème}$ instant d'échantillonnage sont respectivement repris dans les colonnes 2i-1 et 2i, avec 1 $\leq$ i $\leq$ *l*.

4. Procédé selon l'une des revendications précédentes, **caractérisé en ce qu'**une ligne ou plusieurs lignes de la matrice unitaire V$^†$ sont respectivement affectées au signal (S) en tant que paramètre de comparaison, étant entendu qu'il est plus particulièrement fait appel à la deuxième ligne de la matrice unitaire V$^†$.

5. Procédé selon l'une des revendications précédentes, **caractérisé en ce que** sont déterminées, pour l'application du signal respectif (S) sur l'intervalle normalisé, la valeur maximale et la valeur minimale des valeurs d'échantillonnage (E$_i$) du signal respectif (S),

- pour la valeur d'échantillonnage maximale (E$_i$), le premier élément (q$_i$) étant forcé à une valeur d'intervalle maximale, en particulier la valeur 1, et le deuxième élément ($\overline{\overline{q}}_i$), à la valeur 0, et
- pour la valeur d'échantillonnage minimale (E$_i$), le deuxième élément ($\overline{\overline{q}}_i$) étant forcé à une valeur d'intervalle maximale, en particulier la valeur 1, et le premier élément (q$_i$), à la valeur 0.

6. Procédé selon l'une des revendications précédentes, **caractérisé en ce que** l'ensemble de la matrice de signaux (M) est multiplié par un facteur de pondération w qui correspond à la valeur réciproque de la racine de la moitié du nombre des éléments de la matrice, et plus particulièrement **en ce que** w est choisi égal à $\sqrt{\dfrac{2}{mn}}$ , m correspondant au nombre de lignes et n, au nombre de colonnes de la matrice de signaux (M).

7. Procédé selon l'une des revendications précédentes, **caractérisé en ce que**

- des instants d'échantillonnage et des intervalles d'échantillonnage équidistants sont préalablement définis dans la période de signal ;
- pour le signal est déterminée une fonction d'interpolation qui présente une forme de signal donnée par les valeurs de signal et les instants d'échantillonnage et intervalles d'échantillonnage et
- pour le paramètre de comparaison pour le signal est déterminé, sur la base d'un autre signal, un signal qui est déterminé par échantillonnage de la fonction d'interpolation aux instants d'échantillonnage donnés.

8. Procédé pour comparer deux signaux (S$_1$, S$_2$) avec une durée des périodes de signal préalablement définie, **caractérisé en ce que**

a) respectivement un paramètre de comparaison est déterminé pour chacun des deux signaux (S$_1$, S$_2$) selon une ou plusieurs des revendications 1 à 7 et
b) une valeur de distance D(S$_1$, S$_2$) pour les deux signaux (S$_1$, S$_2$) est créée pour la comparaison des deux signaux (S$_1$, S$_2$) par application d'une mesure de distance aux paramètres de comparaison affectés aux signaux respectifs (S$_1$, S$_2$) et maintien à disposition de la valeur de mesure ainsi déterminée en tant que valeur de comparaison pour la coïncidence des signaux (S$_1$, S$_2$). $D(v_1, \quad v_2) \quad = \quad \sqrt{1 - |v_1^† v_2|^2}$ , où v$_1$ est une

colonne de la matrice $V_1^*$ associée au premier signal S$_1$ et où v$_2$ est une colonne de la matrice $V_2^*$ associée au premier signal S$_2$, avec $(\mathbb{V}^\star)_{ij} = V_{ij}^*.$

9. Procédé selon l'une des revendications précédentes, **caractérisé en ce que**

   a) le premier élément (q$_i$) du vecteur d'échantillonnage est déterminé conformément à $q_i = \sqrt{p_i}$ et le deuxième élément ($\bar{\mathbf{q}}_i$) est plus particulièrement déterminé conformément à $\bar{q}_i = \sqrt{1 - p_i}$ ou

   b) le premier élément (q$_i$) du vecteur d'échantillonnage est déterminé conformément à $q_j = e^{i\varphi_j}\sqrt{p_j}$ et le deuxième élément ($\bar{q}_i$) est plus particulièrement déterminé conformément à $q_j = e^{i\chi_j}\sqrt{1 - p_j}$

10. Procédé selon l'une des revendications précédentes, **caractérisé en ce qu'**est pris en considération, en tant que durée des périodes de signal, respectivement un jour ou un laps de temps de même longueur.

11. Procédé selon l'une des revendications précédentes, **caractérisé en ce qu'**est identifié, en tant qu'émetteur brouilleur, un émetteur satellite pour lequel a été déterminée une valeur de mesure indiquant une grande coïncidence, et plus particulièrement la valeur de mesure indiquant la coïncidence maximale.

12. Support de données sur lequel est stocké un programme destiné à exécuter un procédé selon l'une des revendications précédentes.

# FIG 1

ei - Kabul AFG-KAB-008 (3 MHz)

ASA DBI 01

# FIG 2A

running_average - Kabul AFG-KAB-008 (3 MHz)

# FIG 2B

eimm=ei-running_average - Kabul AFG-KAB-008 (3 MHz)

## FIG 3A

q(:, 1, 1):q=R2Q(range, eimm) - Kabul AFG-KAB-008 (3 MHz)

## FIG 3B

q(:, 1, 2):q=R2Q(range, eimm) - Kabul AFG-KAB-008 (3 MHz)

## FIG 4A

## FIG 4B

## FIG 5A

u2

## FIG 5B

v2

## FIG 6

u3

## FIG 7

v3

## FIG 8A

q(:, 1, 1):q=R2Q(range, eimm) - Rugby UKI-RBY-006 (C0001)

## FIG 8B

R. u(:, 2) - Rugby UKI-RBY-006 (C0001)

## FIG 9A

q(:, 1, 1):q=R2Q(range, eimm) - Rugby UKI-RBY-006 (C0004)

## FIG 9B

R. u(:, 2) - Rugby UKI-RBY-006 (C0004)

## FIG 10A

q(:, 1, 1):q=R2Q(range, eimm) - Kabul AFG-KAB-008 (3 MHz)

## FIG 10B

R. u(:, 2) - Kabul AFG-KAB-008 (3 MHz)

# FIG 11A

q(:, 1, 1):q=R2Q(range, eimm) - Kabul AFG-KAB-008 (7 MHz)

# FIG 11B

R. u(:, 2) - Kabul AFG-KAB-008 (7 MHz)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- LAPACK: PORTABLE LINEARE ALGEBRA-SOFTWARE FÜR SUPERCOMPUTER1. **BISCHOF C H.** INFORMATIONSTECHNIK IT. OLDENBOURG VERLAG, 01. Februar 1992, vol. 34, 44-49

- **E. ANDERSON ; Z. BAI ; C. BISCHOF ; S. BLACKFORD ; J. DEMMEL ; J. DONGARRA ; J. DU CROZ ; A. GREENBAUM ; S. HAMMARLING ; A. MCKENNEY.** LAPACK Users' Guide. *Society for Industrial and Applied Mathematics,* 1999